# EUROPÄISCHE PATENTANMELDUNG

(11) **EP 3 975 488 A1**
(43) Veröffentlichungstag der Anmeldung: **30.03.2022**
(21) Anmeldenummer: 20198954.8
(22) Anmeldetag: 29.09.2020
(51) Int. Cl.: H04L 12/707, H04L 12/721, H04L 12/725, H04L 12/40

(54) **VERFAHREN UND KOMMUNIKATIONSGERÄT ZUR ÜBERMITTLUNG ZEITKRITISCHER DATEN**

(71) Anmelder: Siemens Aktiengesellschaft, 80333 München (DE)
(72) Erfinder: Weichlein, Thomas, 91052 Erlangen (DE)

(57) **Zusammenfassung**

Die Erfindung betrifft ein Verfahren und ein Kommunikationsgerät zur Übermittlung zeitkritischer Daten. Das Kommunikationsgerät dafür ausgestaltet und eingerichtet ist, bei einer Übermittlung von durch erste Kommunikationsgeräte über zumindest zwei zueinander redundante Pfade gesendeten ersten Datagrammen jeweils einen Güteindikator zu ermitteln und in die ersten Datagramme einzufügen. Außerdem reserviert das Kommunikationsgerät auf die ersten Datagramme und auf durch zweite Kommunikationsgeräte zur Reservierung von Ressourcen gesendete zweite Datagramme jeweils bei ausreichender Verfügbarkeit Ressourcen zur Übermittlung von Datenströmen über die redundanten Pfade. Darüber hinaus stellt das Kommunikationsgerät durch die zweiten Kommunikationsgeräte anhand des jeweiligen Güteindikators ausgewählte Pfade zur Übermittlung der Datenströme und nicht ausgewählte Pfade als Reserve-Pfade bereit.

## Beschreibung

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung insbesondere von Audio- und Videodatenströmen (Audio/Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Entsprechend EP 3 038 325 B1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

Aus EP 3 674 824 A1 ist bekannt, dass für Datenströme, die auf Endgeräten ablaufenden ausgewählten Steuerungsanwendungen zugeordnet sind, jeweils ein individuelles Zeitfenster innerhalb vorgegebener Zeitintervalle spezifiziert wird. Die Zeitfenster weisen jeweils eine individuelle Zyklusdauer auf, die ein Vielfaches einer allgemeinen Zyklusdauer ist oder der allgemeinen Zyklusdauer entspricht. Erste bzw. zweite Kommunikationsgeräte überprüfen für die ausgewählten Steuerungsanwendungen jeweils, ob ein spezifiziertes Zeitfenster zur Datenübermittlung verfügbar ist. Bei einem verfügbaren Zeitfenster wird jeweils eine Information über einen Beginn des Zeitfensters innerhalb der vorgegebenen Zeitintervalle an das Endgerät übermittelt, auf dem die jeweilige ausgewählte Steuerungsanwendung abläuft. Datenströme, die ausgewählten Steuerungsanwendungen zugeordnet sind, werden jeweils entsprechend der Information über den Beginn des individuellen Zeitfensters übermittelt.

Um Ausfälle von Übertragungsstrecken oder Kommunikationsgeräten kompensieren zu können, sind Kommunikationsprotokolle, wie Media Redundancy Protocol (MRP), High-availability Seamless Redundancy (HSR), Parallel Redundancy Protocol (PRP) oder IEEE 802.1CB FRER, für hochverfügbare, redundant betreibbare Kommunikationsnetze entwickelt worden. MRP ist im Standard IEC 62439, Clause 2 definiert und ermöglicht eine Kompensation einzelner Verbindungsausfälle in Netzen mit einfacher Ringtopologie durch stoßbehaftete redundante Datenübermittlung (non-seamless redundancy).

Stoßbehaftete Redundanzverfahren sind dadurch gekennzeichnet, dass eine Datenübermittlung erst bei einem Ausfall einer Übertragungsstrecke oder eines Kommunikationsgeräts auf einen verfügbaren redundanten Pfad umgeschaltet wird. Dies ist mit einer Rekonfiguration des Kommunikationsnetzes verbunden, die üblicherweise eine Rekonfigurationszeit von einigen Millisekunden erfordert. Während dieser Rekonfigurationszeit stehen Funktionen des Kommunikationsnetzes eingeschränkt zur Verfügung.

HSR und PRP sind im Standard IEC 62439, Clause 3 definiert und ermöglichen eine stoßfreie redundante Datenübermittlung (seamless redundancy). Entsprechend HSR und PRP wird jeder Datenrahmen von einem sendenden Kommunikationsgerät dupliziert und auf zumindest zwei verschiedenen Pfaden an einen oder mehrere Empfänger gesendet. Redundant empfangene Datenrahmen werden empfängerseitig detektiert und ausgefiltert.

Stoßfreie Redundanzverfahren erfordern einen hohen Ressourcenaufwand zur Duplikatefilterung, dem in zahlreichen Switchen oder Bridges keine adäquaten Hardware-Ressourcen gegenüberstehen. Entsprechend IEEE 802.1CB (Frame Replication and Elimination for Reliability) sind zur Übermittlung von TSN-Datenströmen lediglich stoßfreie Redundanzverfahren vorgesehen.

Der vorliegenden Erfindung liegt die Aufgabe zugrunde, ein Verfahren zur redundanten Übermittlung von Datenströmen mit zeitkritischen Daten zu schaffen, das einerseits geringe Rekonfigurationszeiten ermöglicht und andererseits mit niedrigem Ressourcenaufwand realisierbar ist, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikationsgerät mit den in Anspruch 14 angegebenen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationssystems werden ausgewählte Datagramme Datenströmen zugeordnet und von ersten Kommunikationsgeräten zu zweiten Kommunikationsgeräten über dritte Kommunikationsgeräte umfassende Pfade übermittelt. Die ersten Kommunikationsgeräte senden zur Bekanntmachung abonnierbarer Datenströme jeweils einen Datenstrom-Identifikator umfassende erste Datagramme, insbesondere Talker Advertise oder Talker Announce Nachrichten, über zumindest zwei zueinander redundante Pfade und spezifizieren in den ersten Datagrammen Dienstgüteparameter für den jeweiligen Datenstrom. Insbesondere ist den ersten Kommunikationsgeräten jeweils eine Talker-Funktion zugeordnet, während den zweiten Kommunikationsgeräten jeweils eine Listener-Funktion zugeordnet ist. Die Pfade für die Datenströme können beispielsweise mittels Shortest Path Bridging entsprechend IEEE 802.1aq ermittelt werden.

Vorzugsweise sind die Kommunikationsgeräte über ein Time-sensitive Network, insbesondere entsprechend IEEE 802.1Q, IEEE 802.1AB, IEEE 802.1AS, IEEE 802.1BA und/oder IEEE 802.1CB, miteinander verbunden. Dabei kann eine Weiterleitung der ausgewählten Datagramme mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper und/oder Priority-Based Shaper gesteuert werden.

Die dritten Kommunikationsgeräte ermitteln bei einer Übermittlung der ersten Datagramme über die redundanten Pfade erfindungsgemäß jeweils einen Güteindikator und fügen diesen in die ersten Datagramme ein. Die zweiten Kommunikationsgeräte senden zur Reservierung von durch die dritten Kommunikationsgeräte für eine Übermittlung der Datenströme bereitzustellenden Ressourcen jeweils zweite Datagramme, insbesondere Listener Ready, Listener Join oder Listener Attach Nachrichten, und spezifizieren in diesen den jeweiligen Datenstrom-Identifikator. Auf die ersten und zweiten Datagramme reservieren die dritten Kommunikationsgeräte jeweils bei ausreichender Verfügbarkeit Ressourcen zur Übermittlung der Datenströme über die redundanten Pfade. Die durch die Kommunikationsgeräte bereitzustellenden Ressourcen umfassen insbesondere nutzbare Übertragungszeitfenster, Bandbreite, zugesicherte maximale Latenz, Queue-Anzahl, Queue-Cache bzw. Adress-Cache in Switchen oder Bridges. Die zweiten Kommunikationsgeräte wählen anhand des jeweiligen Güteindikators erfindungsgemäß einen der redundanten Pfade zur Übermittlung der Datenströme aus. Dabei werden nicht ausgewählte Pfade durch die dritten Kommunikationsgeräte als Reserve-Pfade bereitstellt.

Dadurch dass genau einer der redundanten Pfade zur Übermittlung des jeweiligen Datenstroms ausgewählt wird, während die nicht ausgewählten Pfade lediglich als Reserve-Pfade bereitgestellt werden, sind im Gegensatz zu stoßfreien Redundanzverfahren empfängerseitig keine Duplikatefilter-Funktionen erforderlich. Somit lässt sich die vorliegende Erfindung mit geringem Ressourcenaufwand in den Kommunikationsgeräten realisieren. Außerdem können Rekonfigurationszeiten minimiert werden, indem auch Ressourcen für die Reserve-Pfade reserviert werden. Damit kann eine Übermittlung eines Datenstroms bei Topologieänderungen mit sehr geringen Verzögerungen vom jeweils ausgewählten Pfad auf einen Reserve-Pfad umgeschaltet werden.

Der Güteindikator kann beispielsweise einen entlang des jeweiligen Pfads ermittelter Latenzwert, eine maximale reservierte Bandbreite für eine ausgewählte Datenstrom-Klasse entlang des jeweiligen Pfads, eine maximale Auslastung von Übertragungsstrecken für eine ausgewählte Datenstrom-Klasse entlang des jeweiligen Pfads bzw. Pfadkosten umfassen. Insbesondere kann der Güteindikator eine Kombination dieser Kriterien umfassen.

Vorteilhafterweise wählen die zweiten Kommunikationsgeräte jeweils den Pfad mit dem niedrigsten Latenzwert, mit der niedrigsten maximalen reservierten Bandbreite, mit der niedrigsten maximalen Auslastung bzw. mit den niedrigsten Pfadkosten als zunächst aktiven Pfad aus. Bei einer Unterbrechung entlang eines ausgewählten Pfads wird die Übermittlung des jeweiligen Datenstroms vorzugsweise auf einen Reserve-Pfad umgeschaltet. Grundsätzlich können die Ressourcen zur Übermittlung des jeweiligen Datenstroms über den Reserve-Pfad erst nach der Unterbrechung entlang des ausgewählten Pfads reserviert werden. Dies ermöglicht eine weitere Reduktion des Ressourcenaufwands zur Realisierung der vorliegenden Erfindung.

Entsprechend einer bevorzugten Ausgestaltung der vorliegenden Erfindung werden die ausgewählten Datagramme von den ersten Kommunikationsgeräten zu den zweiten Kommunikationsgeräten innerhalb vorgegebener periodischer Zeitintervalle übermittelt werden. Dabei werden die vorgegebenen Zeitintervalle an allen Kommunikationsgeräten synchronisiert. Somit ist die vorliegende Erfindung auch zur Übermittlung von Datenströmen für zyklischem Datenverkehr geeignet, insbesondere in industriellen Automatisierungssystemen.

Vorzugsweise überprüft jedes Kommunikationsgerät entlang eines Pfads für einen Datenstrom anhand der Dienstgüteparameter bei einer Reservierungsanfrage jeweils, ob im jeweiligen Kommunikationsgerät ausreichende Ressourcen zur Datenübermittlung unter Einhaltung der spezifizierten Dienstgüteparameter verfügbar sind. Bei ausreichenden Ressourcen ermitteln Konfigurationssteuerungseinheiten der Kommunikationsgeräte entlang eines Pfads für einen Datenstrom jeweils Konfigurationsinformationen und richten das jeweilige Kommunikationsgerät entsprechend den ermittelten Konfigurationsinformationen zur Ressourcen-Bereitstellung für eine Übermittlung der Datenströme ein. Entsprechend einer besonders bevorzugten Ausgestaltung der vorliegenden Erfindung wird bei Verfügbarkeit ausreichender Ressourcen jeweils eine dem spezifizierten Datenstrom-Identifikator zugeordnete Multicast-Adresse an ein anfragendes zweites Kommunikationsgerät übermittelt.

Das erfindungsgemäße Kommunikationsgerät ist zur Durchführung eines Verfahrens entsprechend vorangehenden Ausführungen vorgesehen und umfasst mehrere Anschlüsse zur Verbindung mit weiteren Kommunikationsgeräten sowie ein Koppelelement, durch das die Anschlüsse schaltbar miteinander verbindbar sind. Das Koppelelement kann insbesondere ein Backplane Switch sein, der mit den Anschlüssen zugeordneten Sende- und Empfangseinheiten verbunden ist. Die Sende- und Empfangseinheiten sind vorzugsweise mittels PHY/MAC-Schaltkreisen realisiert. Darüber hinaus ist das Kommunikationsgerät erfindungsgemäß dafür ausgestaltet und eingerichtet, ausgewählte Datagramme Datenströmen zuzuordnen und von ersten Kommunikationsgeräten zu zweiten Kommunikationsgeräten zu übermitteln. Außerdem ist das Kommunikationsgerät dafür ausgestaltet und eingerichtet, bei einer Übermittlung von durch die ersten Kommunikationsgeräte über zumindest zwei zueinander redundante Pfade gesendeten ersten Datagrammen jeweils einen Güteindikator zu ermitteln und in die ersten Datagramme einzufügen. Dabei umfassen die ersten Datagramme jeweils einen Datenstrom-Identifikator und für den jeweiligen Datenstrom spezifizierte Dienstgüteparameter.

Darüber hinaus ist das Kommunikationsgerät erfindungsgemäß dafür ausgestaltet und eingerichtet, auf die ersten Datagramme und auf durch die zweiten Kommunikationsgeräte zur Reservierung von Ressourcen gesendete zweite Datagramme jeweils bei ausreichender Verfügbarkeit Ressourcen zur Übermittlung der Datenströme über die redundanten Pfade zu reservieren. Dabei umfassen die zweiten Datagramme jeweils einen für den jeweiligen Datenstrom spezifizierten Datenstrom-Identifikator. Schließlich ist das Kommunikationsgerät dafür ausgestaltet und eingerichtet, durch die zweiten Kommunikationsgeräte anhand des jeweiligen Güteindikators ausgewählte Pfade zur Übermittlung der Datenströme und nicht ausgewählte Pfade als Reserve-Pfade bereitzustellen.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationsnetz eines industriellen Automatisierungssystems,
- Figur 2: eine schematische Darstellung einer Übermittlung eines Datenstroms an mehrere Abonnenten über redundante, umschaltbare Pfade.

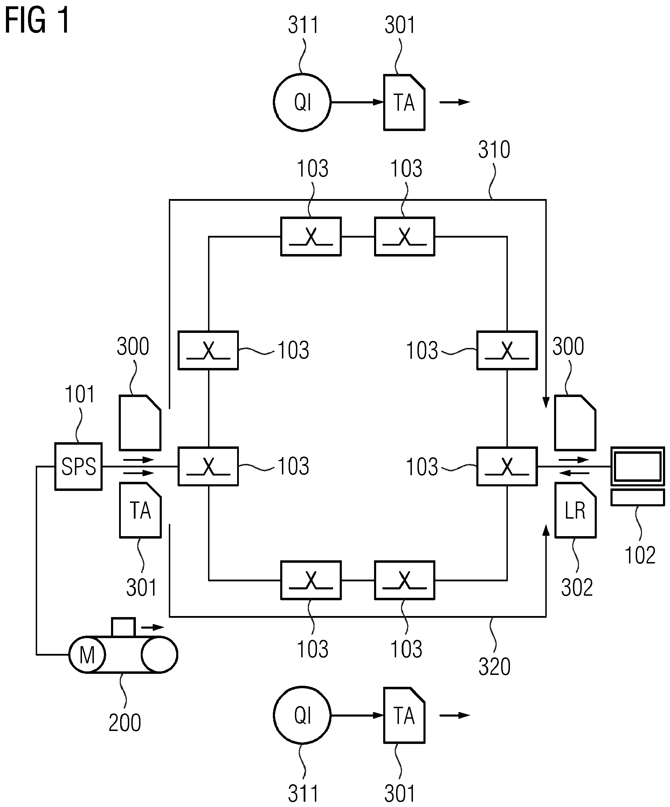

Das in Figur 1 dargestellte Kommunikationsnetz eines industriellen Automatisierungssystems umfasst mehrere Automatisierungs- bzw. Kommunikationsgeräte 101-103. Die Kommunikationsgeräte 103 sind an Zwischen-Netzknoten angeordnet und können beispielsweise Bridges, Switches oder Router sein sowie zum Anschluss von speicherprogrammierbaren Steuerungen 101, Eingabe/Ausgabe-Einheiten (I/O-Module) oder Bedien- und Beobachtungsstationen 102 des industriellen Automatisierungssystems dienen. Im vorliegenden Ausführungsbeispiel ist das die Automatisierungs- bzw. Kommunikationsgeräte 101-103 umfassende Kommunikationsnetz als Time-sensitive Network ausgestaltet, insbesondere entsprechend IEEE 802.1Q, IEEE 802.1AB, IEEE 802.1AS, IEEE 802.1BA bzw. IEEE 802.1CB.

Speicherprogrammierbare Steuerungen 101 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 101 beispielsweise mit einem Switch oder Router oder zusätzlich mit einem Feldbus verbunden. Die Eingabe/AusgabeEinheit dient einem Austausch von Steuerungs- und Messgrößen zwischen der speicherprogrammierbaren Steuerung 101 und einer durch die speicherprogrammierbare Steuerung 101 gesteuerten Maschine oder Vorrichtung 200. Die Zentraleinheit ist insbesondere für eine Ermittlung geeigneter Steuerungsgrößen aus erfassten Messgrößen vorgesehen. Obige Komponenten der speicherprogrammierbaren Steuerung 101 sind im vorliegenden Ausführungsbeispiel über ein Rückwandbus-System miteinander verbunden.

Eine Bedien- und Beobachtungsstation 102 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 102 zur Anzeige von Werten eines Regelungskreises und zur Veränderung von Regelungsparametern verwendet. Bedien- und Beobachtungsstationen 102 umfassen zumindest eine graphische Benutzerschnittstelle, ein Eingabegerät, eine Prozessoreinheit und ein Kommunikationsmodul.

Mittels erster Kommunikationsgeräte 101, die als an Quell-Netzknoten angeschlossene Automatisierungsgeräte ausgestaltet sind und eine Talker-Funktion haben, werden Informationen bzw. Dienste über Multicast-Datenströme zur Nutzung an zweiten Kommunikationsgeräten 102 bereitgestellt, die als an Ziel-Netzknoten angeschlossene Automatisierungsgeräte ausgestaltet sind und eine Listener-Funktion haben. Einem Automatisierungsgerät kann gleichzeitig sowohl eine Talker-Funktion als auch eine Listener-Funktion haben, beispielsweise wenn es einerseits Automatisierungsdienste bereitstellt und andererseits Automatisierungsdienste anderer Geräte nutzt.

Im vorliegenden Ausführungsbeispiel hat die speicherprogrammierbare Steuerung 101 eine Talker-Funktion, während die Bedien- und Beobachtungsstation 102 eine Listener-Funktion aufweist und insbesondere durch die speicherprogrammierbare Steuerung 101 bereitgestellte Informationen empfängt. Grundsätzlich könnte die Bedien- und Beobachtungsstation 102 von der speicherprogrammierbaren Steuerung 101 empfangene Informationen analysieren und hieraus Steuerungsparameter für die speicherprogrammierbare Steuerung 101 vorgeben. Somit würden sowohl die speicherprogrammierbare Steuerung 101 als auch die Bedien- und Beobachtungsstation beide Funktionen wahrnehmen.

Im Sinn einer vereinfachten Darstellung wird nachfolgend davon ausgegangen, dass beide Geräte jeweils nur eine zugeordnete Funktion aufweisen.

Im vorliegenden Ausführungsbeispiel werden ausgewählte Datagramme 300 Datenströmen zugeordnet und von ersten Kommunikationsgeräten 101 zu zweiten Kommunikationsgeräten 102 über dritte Kommunikationsgeräte 103 umfassende Pfade übermittelt. Vorzugsweise werden die ausgewählten Datagramme 300 von den ersten Kommunikationsgeräten 101 zu den zweiten Kommunikationsgeräten 102 innerhalb vorgegebener periodischer Zeitintervalle übermittelt, die an allen Kommunikationsgeräten synchronisiert werden. Eine Weiterleitung der ausgewählten Datagramme 300 kann insbesondere mittels Frame Preemption gemäß IEEE 802.1Qbu, Time-Aware Shaper gemäß IEEE 802.1Qbv, Credit-Based Shaper gemäß IEEE 802.1Qav, Burst Limiting Shaper, Peristaltic Shaper bzw. Priority-Based Shaper gesteuert werden.

Zur Bekanntmachung abonnierbarer Datenströme senden die ersten Kommunikationsgeräte 101 jeweils einen Datenstrom-Identifikator umfassende erste Datagramme 301, insbesondere Talker Advertise oder Talker Announce Nachrichten, über zumindest zwei zueinander redundante Pfade 310, 320 senden und spezifizieren in den ersten Datagrammen 301 Dienstgüteparameter für den jeweiligen Datenstrom. Bei einer Übermittlung der ersten Datagramme 301 über die redundanten Pfade 310, 320 ermitteln die dritten Kommunikationsgeräte 103 jeweils einen Güteindikator 311 und fügen diesen jeweils in die ersten Datagramme 301 ein. Der Güteindikator 311 kann beispielsweise einen entlang des jeweiligen Pfads 310, 320 ermittelten Latenzwert, eine maximale reservierte Bandbreite für eine ausgewählte Datenstrom-Klasse entlang des jeweiligen Pfads 310, 320, eine maximale Auslastung von Übertragungsstrecken für eine ausgewählte Datenstrom-Klasse entlang des jeweiligen Pfads 310, 320, Pfadkosten oder eine Kombination dieser Kriterien umfassen.

Die zweiten Kommunikationsgeräte 102 senden zur Reservierung von durch die dritten Kommunikationsgeräte 103 für eine Übermittlung der Datenströme bereitzustellenden Ressourcen jeweils zweite Datagramme 302, insbesondere Listener Ready, Listener Join oder Listener Attach Nachrichten, und spezifizieren in diesen den jeweiligen Datenstrom-Identifikator. Die dritten Kommunikationsgeräte 103 reservieren auf die ersten und zweiten Datagramme 301, 302 - jeweils bei ausreichender Verfügbarkeit - Ressourcen zur Übermittlung der Datenströme über die redundanten Pfade 310, 320. Die durch die Kommunikationsgeräte 101-103 bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switchen oder Bridges.

Die zweiten Kommunikationsgeräte 102 wählen anhand des jeweiligen Güteindikators 311 einen der redundanten Pfade 310, 320 zur Übermittlung der Datenströme aus. Dabei werden nicht ausgewählte Pfade durch die dritten Kommunikationsgeräte 103 als Reserve-Pfade bereitstellt. Im vorliegenden Ausführungsbeispiel wählen die zweiten Kommunikationsgeräte 102 jeweils den Pfad 310, 320 mit dem niedrigsten Latenzwert, mit der niedrigsten maximalen reservierten Bandbreite, mit der niedrigsten maximalen Auslastung bzw. mit den niedrigsten Pfadkosten oder mit einer optimalen Kombination dieser Kriterien aus. Insbesondere wird die Übermittlung des jeweiligen Datenstroms bei einer Unterbrechung entlang eines ausgewählten Pfads 310, 320 auf einen Reserve-Pfad umgeschaltet. Hierzu müssen die Ressourcen zur Übermittlung des jeweiligen Datenstroms über den Reserve-Pfad nicht unbedingt prophylaktisch reserviert werden. Vielmehr ist es grundsätzlich ausreichend, wenn die Ressourcen zur Übermittlung des jeweiligen Datenstroms über den Reserve-Pfad erst nach der Unterbrechung entlang des ausgewählten Pfads reserviert werden.

Entsprechend einem dezentralen Ansatz zur Reservierung von Ressourcen zur Übermittlung von Datenströmen überprüft jedes Kommunikationsgerät 101-103 entlang eines Pfads 310, 320 für einen Datenstrom anhand der Dienstgüteparameter bei einer Reservierungsanfrage jeweils, ob im jeweiligen Kommunikationsgerät 101-103 ausreichende Ressourcen zur Datenübermittlung unter Einhaltung der spezifizierten Dienstgüteparameter verfügbar sind. Eine zentrale Instanz zur Ressourcenverwaltung oder Pfadermittlung ist mit dem dezentralen Ansatz zur Ressourcen-Reservierung für Datenströme nicht erforderlich. Die Pfade 310, 320 für die Datenströme können beispielsweise mittels Shortest Path Bridging entsprechend IEEE 802.1aq ermittelt werden.

Bei Verfügbarkeit ausreichender Ressourcen wird jeweils eine dem spezifizierten Datenstrom-Identifikator zugeordnete Multicast-Adresse an ein anfragendes zweites Kommunikationsgerät 102 übermittelt. Außerdem ermitteln Konfigurationssteuerungseinheiten der Kommunikationsgeräte 101-103 entlang eines Pfads 310, 320 für einen Datenstrom bei ausreichenden Ressourcen jeweils Konfigurationsinformationen und richten das jeweilige Kommunikationsgerät 101-103 entsprechend den ermittelten Konfigurationsinformationen zur Ressourcen-Bereitstellung für eine Übermittlung der Datenströme ein.

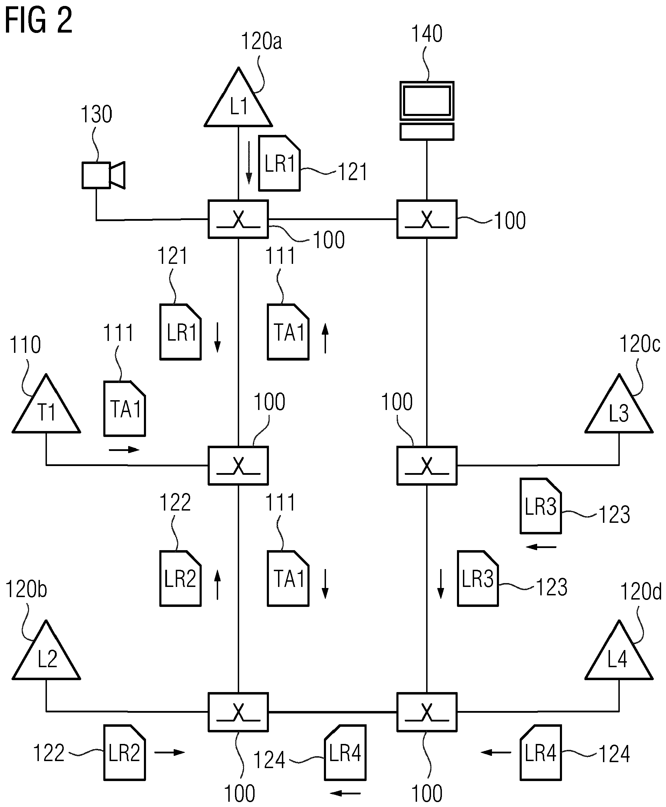

Entsprechend der Darstellung in Figur 2 für eine Übermittlung eines Datenstroms durch einen Talker 110 an mehrere Abonnenten bzw. Listener 120a-120d sendet der Talker 110 innerhalb einer mehrere Switche 100 umfassenden Ringtopologie Talker Advertisement Nachrichten 111 in beide Richtungen der Ringtopologie. Im vorliegenden Ausführungsbeispiel verwenden ein erster Listener 120a und ein zweiter Listener 120b Accumulated Latency als Pfadauswahlkriterium. Aufgrund beispielsweise einer besseren Accumulated Latency für in Uhrzeigerrichtung versendete Talker Advertisment Nachtrichten 111 wählt der erste Listener 120a einen Pfad in Gegenuhrzeigerrichtung zum Talker 110 aus und versendet seine Listener Ready Nachrichten 121 in diese Richtung. Der zweiter Listener 120b wählt dagegen beispielsweise aufgrund einer besseren Accumulated Latency für in Gegenuhrzeigerrichtung versendete Talker Advertisment Nachtrichten 111 einen Pfad in Uhrzeigerrichtung aus und versendet seine Listener Ready Nachrichten 122 in diese Richtung.

Für einen dritten Listener 120c ist die Accumulated Latency der Talker Advertisment Nachtrichten 111 im vorliegenden Ausführungsbeispiel in beiden Richtungen innerhalb der Ringtopologie gleich. Aufgrund dessen verwendet der dritte Listener 120c eine geringe Ressourcenauslastung als zusätzliches Pfadauswahlkriterium. Beispielsweise kann die Ressourcenauslastung in Uhrzeigerrichtung infolge eines für eine Videoübertragung von einer Kamera 130 zu einer Bedien- und Beobachtungsstation 140 eingerichteten Datenstroms höher sein. In diesem Fall wählt der dritte Listener 120c den Pfad in Gegenuhrzeigerrichtung aus und versendet seine Listener Ready Nachtrichten 123 in diese Richtung.

Ist bereits ein Datenstrom vom Talker 110 in Gegenuhrzeigerrichtung zum dritten Listener 120c über einen Switch 100 aufgebaut, an den ein vierter Listener 120d angeschlossen ist, so schließt sich der vierte Listener 120d diesem Datenstrom einfach an und versendet seine Listener Ready Nachricht 124 dementsprechend in Uhrzeigerrichtung.

## Patentansprüche

1. Verfahren zur Übermittlung zeitkritischer Daten innerhalb eines Kommunikationssystems, bei dem
- ausgewählte Datagramme (300) Datenströmen zugeordnet und von ersten Kommunikationsgeräten (101) zu zweiten Kommunikationsgeräten (102) über dritte Kommunikationsgeräte (103) umfassende Pfade übermittelt werden,
- die ersten Kommunikationsgeräte zur Bekanntmachung abonnierbarer Datenströme jeweils einen Datenstrom-Identifikator umfassende erste Datagramme (301) über zumindest zwei zueinander redundante Pfade (310, 320) senden und in den ersten Datagrammen Dienstgüteparameter für den jeweiligen Datenstrom spezifizieren,
- die dritten Kommunikationsgeräte bei einer Übermittlung der ersten Datagramme über die redundanten Pfade jeweils einen Güteindikator (311) ermitteln und in die ersten Datagramme einfügen,
- die zweiten Kommunikationsgeräte zur Reservierung von durch die dritten Kommunikationsgeräte für eine Übermittlung der Datenströme bereitzustellenden Ressourcen jeweils zweite Datagramme (302) senden und in diesen den jeweiligen Datenstrom-Identifikator spezifizieren,
- die dritten Kommunikationsgeräte auf die ersten und zweiten Datagramme jeweils bei ausreichender Verfügbarkeit Ressourcen zur Übermittlung der Datenströme über die redundanten Pfade reservieren,
- die zweiten Kommunikationsgeräte anhand des jeweiligen Güteindikators einen der redundanten Pfade zur Übermittlung der Datenströme auswählen, wobei nicht ausgewählte Pfade durch die dritten Kommunikationsgeräte als Reserve-Pfade bereitstellt werden.

2. Verfahren nach Anspruch 1,
bei dem der Güteindikator einen entlang des jeweiligen Pfads ermittelter Latenzwert, eine maximale reservierte Bandbreite für eine ausgewählte Datenstrom-Klasse entlang des jeweiligen Pfads, eine maximale Auslastung von Übertragungsstrecken für eine ausgewählte Datenstrom-Klasse entlang des jeweiligen Pfads und/oder Pfadkosten umfasst.

3. Verfahren nach Anspruch 2,
bei dem die zweiten Kommunikationsgeräte jeweils den Pfad mit dem niedrigsten Latenzwert, mit der niedrigsten maximalen reservierten Bandbreite, mit der niedrigsten maximalen Auslastung und/oder mit den niedrigsten Pfadkosten auswählen.

4. Verfahren nach einem der Ansprüche 1 bis 3,
bei dem bei einer Unterbrechung entlang eines ausgewählten Pfads die Übermittlung des jeweiligen Datenstroms auf einen Reserve-Pfad umgeschaltet wird.

5. Verfahren nach Anspruch 4,
bei dem die Ressourcen zur Übermittlung des jeweiligen Datenstroms über den Reserve-Pfad erst nach der Unterbrechung entlang des ausgewählten Pfads reserviert werden.

6. Verfahren nach einem der Ansprüche 1 bis 5,
bei dem die ausgewählten Datagramme (300) von den ersten Kommunikationsgeräten (101) zu den zweiten Kommunikationsgeräten (102) innerhalb vorgegebener periodischer Zeitintervalle übermittelt werden und bei dem die vorgegebenen Zeitintervalle an allen Kommunikationsgeräten (101-103) synchronisiert werden.

7. Verfahren nach einem der Ansprüche 1 bis 6,
bei dem jedes Kommunikationsgerät (101-103) entlang eines Pfads (310, 320) für einen Datenstrom anhand der Dienstgüteparameter bei einer Reservierungsanfrage jeweils überprüft, ob im jeweiligen Kommunikationsgerät ausreichende Ressourcen zur Datenübermittlung unter Einhaltung der spezifizierten Dienstgüteparameter verfügbar sind und bei dem Konfigurationssteuerungseinheiten der Kommunikationsgeräte entlang eines Pfads für einen Datenstrom bei ausreichenden Ressourcen jeweils Konfigurationsinformationen ermitteln und das jeweilige Kommunikationsgerät entsprechend den ermittelten Konfigurationsinformationen zur Ressourcen-Bereitstellung für eine Übermittlung der Datenströme einrichten.

8. Verfahren nach einem der Ansprüche 1 bis 7,
bei dem die durch die Kommunikationsgeräte bereitzustellenden Ressourcen nutzbare Übertragungszeitfenster, Bandbreite, zugesicherte maximale Latenz, Queue-Anzahl, Queue-Cache und/oder Adress-Cache in Switchen oder Bridges umfassen.

9. Verfahren nach einem der Ansprüche 1 bis 8,
bei dem bei Verfügbarkeit ausreichender Ressourcen jeweils eine dem spezifizierten Datenstrom-Identifikator zugeordnete Multicast-Adresse an ein anfragendes zweites Kommunikationsgerät übermittelt wird.

10. Verfahren nach einem der Ansprüche 1 bis 9,
bei dem die Kommunikationsgeräte über ein Time-sensitive Network, insbesondere entsprechend IEEE 802.1Q, IEEE 802.1AB, IEEE 802.1AS, IEEE 802.1BA und/oder IEEE 802.1CB, miteinander verbunden sind.

11. Verfahren nach Anspruch 10,
bei dem eine Weiterleitung der ausgewählten Datagramme mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper und/oder Priority-Based Shaper gesteuert wird.

12. Verfahren nach einem der Ansprüche 1 bis 11,
bei dem den ersten Kommunikationsgeräten jeweils eine Talker-Funktion zugeordnet ist und bei dem den zweiten Kommunikationsgeräten jeweils eine Listener-Funktion zugeordnet ist.

13. Verfahren nach einem der Ansprüche 1 bis 12,
bei dem die Pfade für die Datenströme mittels Shortest Path Bridging entsprechend IEEE 802.1aq ermittelt werden.

14. Kommunikationsgerät zur Durchführung eines Verfahrens nach einem der Ansprüche 1 bis 13 mit
- mehreren Anschlüssen zur Verbindung mit weiteren Kommunikationsgeräten,
- einem Koppelelement, durch das die Anschlüsse schaltbar miteinander verbindbar sind,
- wobei das Kommunikationsgerät dafür ausgestaltet und eingerichtet ist, ausgewählte Datagramme Datenströmen zuzuordnen und von ersten Kommunikationsgeräten zu zweiten Kommunikationsgeräten zu übermitteln,
- bei einer Übermittlung von durch die ersten Kommunikationsgeräte über zumindest zwei zueinander redundante Pfade gesendeten ersten Datagrammen jeweils einen Güteindikator zu ermitteln und in die ersten Datagramme einzufügen, wobei die ersten Datagramme jeweils einen Datenstrom-Identifikator und für den jeweiligen Datenstrom spezifizierte Dienstgüteparameter umfassen,
- auf die ersten Datagramme und auf durch die zweiten Kommunikationsgeräte zur Reservierung von Ressourcen gesendete zweite Datagramme jeweils bei ausreichender Verfügbarkeit Ressourcen zur Übermittlung der Datenströme über die redundanten Pfade zu reservieren, wobei die zweiten Datagramme jeweils einen für den jeweiligen Datenstrom spezifizierten Datenstrom-Identifikator umfassen,
- durch die zweiten Kommunikationsgeräte anhand des jeweiligen Güteindikators ausgewählte Pfade zur Übermittlung der Datenströme und nicht ausgewählte Pfade als Reserve-Pfade bereitzustellen.
